# EUROPÄISCHE PATENTSCHRIFT

(11) **EP 0 451 312 B1**
(45) Veröffentlichungstag und Bekanntmachung des Hinweises auf die Patenterteilung: **14.12.1994**
(21) Anmeldenummer: 90107016.9
(22) Anmeldetag: 12.04.1990
(51) Int. Cl.: H04Q 3/52

(54) **Breitbandsignal-Koppeleinrichtung**
Switching device for broad-band signals
Dispositif de commutation pour signaux à large bande

(43) Veröffentlichungstag der Anmeldung: 16.10.1991
(73) Patentinhaber: SIEMENS AKTIENGESELLSCHAFT, 80333 München (DE)
(72) Erfinder: Hofmann, Rüdiger, Dr. rer. nat., D-8031 Gilching (DE)

(56) Entgegenhaltungen:
- EP-A- 0 219 848
- EP-A- 0 345 623
- IEEE JOURNAL OF SOLID-STATE CIRCUITS. vol. 24, no. 2, April 1989, NEW YORK USSeiten 478 - 486; H.J. Shin et al: "A 250-Mbit/s CMOS Crosspoint Switch"

## Beschreibung

Läßt sich die ECL-Technik durch Eigenschaften wie hohe Arbeitsgeschwindigkeit, (mittel-)hoher Integrationsgrad und (mittel-) hohe Verlustleistung charakterisieren, so zeichnet sich die FET-Technik - bei demgegenüber allerdings nur mittleren Arbeitsgeschwindigkeiten - durch einen sehr hohen Integrationsgrad und sehr niedrige Verlustleistungen aus. Diese letzteren Eigenschaften führen zu dem Bemühen, mit integrierten Schaltungen in FET-Technik auch in bislang der Bipolar-Technik vorbehaltene Geschwindigkeitsbereiche vorzudringen.

Für eine Breitbandsignal-Koppeleinrichtung mit einer Koppelpunktmatrix, die jeweils mit zwei Signalleitern gebildete Matrixeingangsleitungen aufweist, welche einerseits jeweils an zwei Differenz-(Komplementär-)ausgänge einer Eingangsdigitalsignalschaltung angeschlossen sind und andererseits über Koppelpunkte mit ebenfalls jeweils mit zwei Signalleitern gebildeten Matrixausgangsleitungen verbindbar sind, welche jeweils mit ihren beiden Signalleitern zu den beiden Signaleingängen einer mit einem Differenzverstärker gebildeten Ausgangsverstärkerschaltung führen, ist in diesem Zusammenhang (aus EP-A-0 264 046) eine in FET-Technik ausgebildete Koppelpunktmatrix mit in den Koppelpunkten vorgesehenen, jeweils mit zwei jeweils an der Steuerelektrode mit einem Durchschalte-bzw. Sperrsignal beaufschlagten Schalter-Transistoren gebildeten Koppelelementpaaren bekannt, deren Schalter-Transistoren jeweils mit einer Hauptelektrode an den einen bzw. anderen Signalleiter der zugehörigen Matrixausgangsleitung angeschlossen sind, die ihrerseits mit einem Ausgangs-Differenzverstärker mit Kippverhalten versehen ist, wobei die Koppelelementpaare jeweils zwei jeweils mit einem Schalter-Transistor eine Serienschaltung bildende Eingangs-Transistoren aufweisen,
die jeweils mit der Steuerelektrode an den einen bzw. den anderen Signalleiter der zugehörigen Matrixeingangsleitung angeschlossen sind und deren jeweilige der Serienschaltung abgewandte Hauptelektrode über einen Abtast-Transistor mit dem einen Anschluß (Masse) der Betriebsspannungsquelle verbunden ist, mit deren anderen Anschluß jeder Signalleiter der jeweiligen Matrixausgangsleitung jeweils über einen Vorlade-Transistor verbunden ist,
und wobei Vorlade-Transistoren und Abtast-Transistor gegensinnig zueinander jeweils an ihrer Steuerelektrode mit einem eine Bit-Durchschaltezeitspanne in eine Vorladephase und die eigentliche Durchschaltephase unterteilenden Koppelfeld-Ansteuer-Takt beaufschlagt sind, so daß in jeder Vorphase bei gesperrtem Abtast-Transistor beide Signalleiter der Matrixausgangsleitung über den jeweiligen Vorlade-Transistor zumindest angenähert auf das an dem genannten anderen Anschluss der Betriebsspannungsquelle herrschende Potential geladen werden.
Diese bekannte Breitbandsignal-Koppeleinrichtung bringt zusätzlich zu den Vorteilen, die mit einer in FET-Technik gehaltenen Koppelpunktmatrix verbunden sind, den weiteren Vorteil mit sich, daß einerseits - bei gesperrtem Koppelpunkt - auch ohne zusätzliche Dämpfungsmaßnahmen keine störende Signale über den Koppelpunkt zum Matrixausgang gelangen und daß andererseits - bei leitendem Koppelpunkt - bei der eigentlichen Bitdurchschaltung ggf. stattfindende Umladungen der Matrixausgangsleitung stets von dem dem einen Signalzustand entsprechenden einen Betriebspotential ausgehend in nur einer Umladerichtung vor sich gehen und somit bereits mit einer (dem Überschreiten einer diesem Betriebspotentialwert benachbarten, dem Kippunkt des Differenzverstärkers entsprechenden Schwelle entsprechenden) kleinen Umladung - und damit entsprechend schnell - ein eindeutiger Übergang des am Ausgang der Koppeleinrichtung auftretenden, durchgeschalteten Digitalsignals von dem einen in den anderen Signalzustand verbunden ist.

Bei einer solchen Breitbandsignal-Koppeleinrichtung kann eine weitere Erhöhung der Arbeitsgeschwindigkeit dadurch ermöglicht werden, daß die beiden Vorlade-Transistoren an ihren der jeweiligen Matrixausgangsleitung zugewandten Hauptelektroden miteinander über einen Quertransistor verbunden sind, dessen Steuerelektrode mit den Steuerelektroden der Vorlade-Transistoren verbunden ist (EP-A-0 345 623); dies bringt in Verbindung mit dem Vorteil einer Beschleunigung der Vorladung der Matrixausgangsleitungen den weiteren Vorteil einer sehr frühzeitigen Potentialsymmetrierung der Matrixausgangsleitungen mit sich, so daß auch entsprechend frühzeitig die Anfangsbedingungen für eine sichere Verstärkung durch einen nachfolgenden Differenzverstärker gegeben sind.
Die hinsichtlich Verlustleistungsbedarf und Arbeitsgeschwindigkeit erreichbaren Vorteile einer solchen bekannten Breitband-Koppeleinrichtung, die jeweils mit zwei Signalleitern gebildete Matrixeingangsleitungen aufweist, sind mit einem entsprechenden Platzbedarf für solche jeweils zwei Signalleiter der Matrixeingangsleitungen verbunden.

Eine andere bekannte Breitbandsignal-Koppeleinrichtung mit einer Koppelpunktmatrix in FET-Technik, deren Matrixeingangsleitungen über jeweils mit Koppelelementpaaren gebildete Koppelpunkte mit jeweils mit zwei Signalleitern gebildeten Matrixausgangsleitungen verbindbar sind, an deren beiden Signalleiter jeweils die beiden Signaleingänge einer mit einem Differenzverstärker mit Kippverhalten gebildeten Ausgangsverstärkerschaltung anschließbar sind,
wobei die Koppelelementpaare jeweils mit zwei jeweils an der Steuerelektrode mit einem Durchschalte- bzw. Sperrsignal beaufschlagten und mit einer Hauptelektrode an den einen bzw. anderen Signalleiter der zugehörigen Matrixausgangsleitung angeschlossenen Schalter-Transistoren und zwei jeweils mit einem Schalter- Transistor eine Serienschaltung bildenden Eingangs-Transistor gebildet sind,
die jeweils mit der Steuerelektrode an einen Signalleiter der zugehörigen Matrixeingangsleitung angeschlossen sind und deren jeweilige der Serienschaltung abgewandte Hauptelektrode über einen koppelelement-, matrixeingangsleitungs- oder matrixausgangsleitungs-individuellen Abtast-Transistor mit dem einen Anschluß der Betriebsspannungsquelle verbunden ist, mit deren anderen Anschluß jeder Signalleiter der jeweiligen Matrixausgangsleitung jeweils über einen Vorlade-Transistor verbunden ist,
wobei Vorlade-Transistoren und Abtast-Transistor gegensinnig zueinander jeweils an ihrer Steuerelektrode mit einem eine Bit-Durchschaltezeitspanne in eine Vorladephase und die eigentliche Durchschaltephase unterteilenden Koppelfeld-Ansteuer-Takt beaufschlagt sind, so daß in jeder Vorphase bei gesperrtem Abtast-Transistor beide Signalleiter der Matrixausgangsleitung über den jeweiligen Vorlade-Transistor zumindest angenähert auf das an dem genannten anderen Anschluss der Betriebsspannungsquelle herrschende Potential geladen werden,
und wobei die beiden Vorlade-Transistoren an ihren der jeweiligen Matrixausgangsleitung zugewandten Hauptelektroden miteinander über einen Quertransistor verbunden sind, dessen Steuerelektrode mit den Steuerelektroden der Vorlade-Transistoren verbunden ist,
hat einen demgegenüber geringeren Platzbedarf dadurch, daß die Koppelelementpaare jeweils zwei Eingangs-Transistoren unterschiedlichen Kanaltyps aufweisen, die mit ihrer Steuerelektrode an ein und denselben Signalleiter der zugehörigen Matrixeingangsleitung angeschlossen sind (DE-P 39 09 550 veröffentlicht als EP-A- 0 388 856 am 26.09.90).
Eine solche bekannte Breitbandsignal-Koppeleinrichtung benötigt - mit entsprechend verringertem Platzbedarf - je Matrixeingangsleitung nur einen einzigen Signalleiter, behält zugleich aber die sonstigen Besonderheiten und vorteilhaften Eigenschaften der eingangs erwähnten bekannten Breitbandsignal-Koppeleinrichtung bei.

Die Erfindung zeigt nun einen anderen Weg zu einer Verringerung des Platzbedarfs in einer Breitbandsignal-Koppeleinrichtung. Die Erfindung betrifft eine Breitbandsignal-Koppeleinrichtung mit einer Koppelpunktmatrix in FET-Technik, deren Matrixeingangsleitungen über jeweils mit Koppelelementpaaren gebildete Koppelpunkte mit jeweils mit zwei Signalleitern gebildeten Matrixausgangsleitungen verbindbar sind, an deren beiden Signalleiter jeweils die beiden Signaleingänge einer mit einem Differenzverstärker mit Kippverhalten gebildeten Ausgangsverstärkerschaltung anschließbar sind, wobei die Koppelelementpaare jeweils mit zwei jeweils an der Steuerelektrode mit einem Durchschalte- bzw. Sperrsignal beaufschlagten und mit einer Hauptelektrode an den einen bzw. anderen Signalleiter der zugehörigen Matrixausgangsleitung angeschlossenen Schalter-Transistoren und zwei jeweils mit einem Schalter-Transistor eine Serienschaltung bildenden Eingangs-Transistoren gebildet sind, die jeweils mit der Steuerelektrode an einen Signalleiter der zugehörigen Matrixeingangsleitung angeschlossen sind,
wobei die beiden Signalleiter der jeweiligen Matrixausgangsleitung mit dem einen Anschluß der Betriebsspannungsquelle über Vorlade-Transistoren verbunden sind, die jeweils mit ihrer Steuerelektrode an die Taktsignalleitung eines eine Bit-Durchschaltezeitspanne in eine Vorladephase und die eigentliche Umlade- bzw. Durchschaltephase unterteilenden Koppelfeld-Ansteuer-Taktes angeschlossen sind, so daß in jeder Vorladephase beide Signalleiter der Matrixausgangsleitung über den jeweiligen Vorlade-Transistor zumindest angenähert auf das an dem genannten einen Anschluß der Betriebsspannungsquelle herrschende Potential geladen werden, und wobei die beiden Vorlade-Transistoren an ihren der jeweiligen Matrixausgangsleitung zugewandten Hauptelektroden miteinander über einen Quertransistor verbunden sein können, dessen Steuerelektrode mit den Steuerelektroden der Vorlade-Transistoren verbunden ist;
diese Breitbandsignal-Koppeleinrichtung ist erfindungsgemäß dadurch gekennzeichnet, daß in die Eingangsleitungen jeweils eine mit ihrem Steuereingang an die Taktsignalleitung angeschlossene, gegensinnig zu den Vorlade-Transistoren gesteuerte Verknüpfungsschaltung eingefügt ist und daß in den Koppelelementpaaren die der jeweiligen Serienschaltung abgewandten Hauptelektroden der beiden Eingangs-Transistoren direkt mit dem anderen Anschluß der Betriebsspannungsquelle verbunden sind.

Die Erfindung bringt den Vorteil mit sich, keinen Abtast-Transistor am Fußpunkt von Koppelelementen - und auch keine entsprechenden Leitungsführungen - zur Abtrennung der Schalter-Transistoren von dem betreffenden Anschluß (Masse) der Betriebsspannungsquelle in der Vorladephase zu benötigen, diese Abtrennfunktion aber durch eine entsprechende Taktung der Matrixeingangsleitungen mittels entsprechender, im Vorladetakt gesperrter Verknüpfungsschaltungen in den Matrixeingangsleitungen dennoch zu gewährleisten, indem allen Matrixeingangsleitungs-Signalleitern im Vorladetakt das Masse-Potential aufgeprägt wird mit der Folge einer Sperrung der in den Koppelelementpaaren enthaltenen Eingangs-Transistoren.

In weiterer Ausgestaltung der Erfindung kann jedem Verknüpfungsglied eine Treiberschaltung nachgeschaltet sein, mit deren Hilfe ggf. auch eine von den Verknüpfungsgliedern bewirkte Invertierung rückgängig gemacht werden kann.

Zum Anschluß an zwei - Komplementärsignale führende - Signalleiter der zugehörigen Matrixeingangsleitung ist es zweckmäßig, daß die Koppelelementpaare in weiterer Ausgestaltung der Erfindung jeweils zwei Eingangs-Transistoren gleichen Kanaltyps aufweisen.

Gemäß einer anderen vorteilhaften Ausgestaltung der Erfindung können die Koppelelementpaare jeweils zwei Eingangs-Transistoren unterschiedlichen Kanaltyps aufweisen, die mit ihrer Steuerelektrode an ein und denselben Signalleiter der zugehörigen Matrix-Eingangsleitung angeschlossen sind; man benötigt damit je Matrix-Eingangsleitung nur einen einzigen Signalleiter, was den Platzbedarf weiter verringert.

Eine noch deutlichere Verringerung des Flächenbedarfs erzielt man, wenn in weiterer Ausgestaltung der Erfindung die Koppelelementpaare jeweils zwei Schalter-Transistoren unterschiedlichen Kanaltyps aufweisen, die jeweils mit einem Vorschalt-Transistor desselben Kanaltyps eine Serienschaltung bilden.

Um dabei eine unsymmetrische Belastung der beiden Signalleiter der Matrixausgangsleitungen und damit auch eine unsymmetrische Belastung der beiden Eingänge eines nachfolgenden Differenzverstärkers zu vermeiden, kann die Breitbandsignal-Koppeleinrichtung gemäß der Erfindung weiterhin dahingehend ausgestaltet sein, daß nur bei einem Teil der zu ein und derselben Matrixausgangsleitung führenden Koppelelementpaare jeweils die Transistor-Serienschaltung des einen Kanaltyps mit dem einen Signalleiter und die Transistor-Serienschaltung des anderen Kanaltyps mit dem anderen Signalleiter der Matrixausgangsleitung verbunden ist, während bei dem anderen Teil der zu der betreffenden Matrixausgangsleitung führenden Koppelelementpaare jeweils die Transistor-Serienschaltung des genannten anderen Kanaltyps mit dem genannten einen Signalleiter und die Transistor-Serienschaltung des genannten einen Kanaltyps mit dem genannten anderen Signalleiter der Matrixausgangsleitung verbunden ist; dies kann insbesondere in der Weise geschehen, daß in der einen bzw. in der anderen Weise mit den Signalleitern der zugehörigen Matrixausgangsleitung verbundene Koppelelementpaare in der betreffenden Matrixreihe abwechselnd aufeinanderfolgen.

Weitere Besonderheiten der Erfindung werden aus der nachfolgenden näheren Erläuterung der Erfindung anhand der Zeichnung ersichtlich. Dabei zeigen
- FIG 1 und FIG 2: ein Schema einer Breitbandsignal-Koppeleinrichtung gemäß der Erfindung;
- FIG 3, FIG 4 und FIG 5: zeigen Beispiele der schaltungstechnischen Realisierung ihrer Koppelelemente, und
- FIG 6: verdeutlicht Signalverläufe darin.

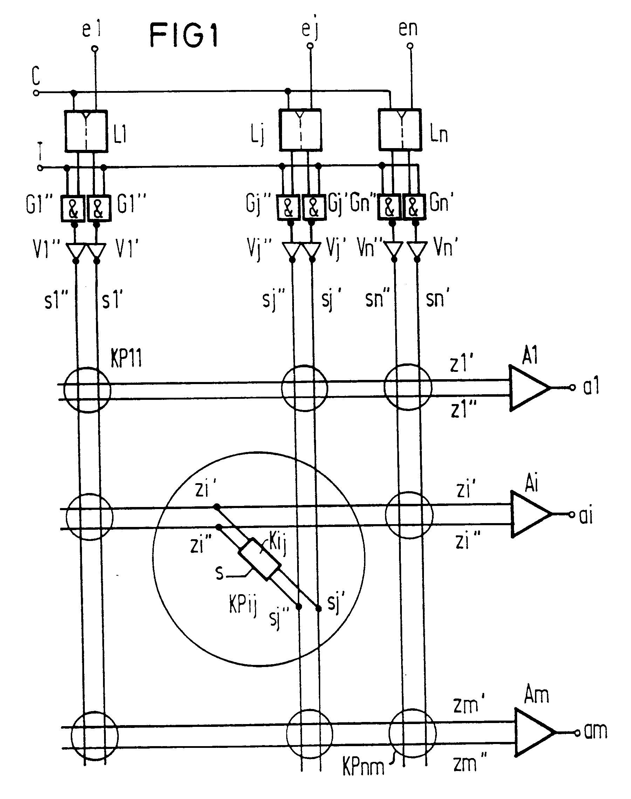

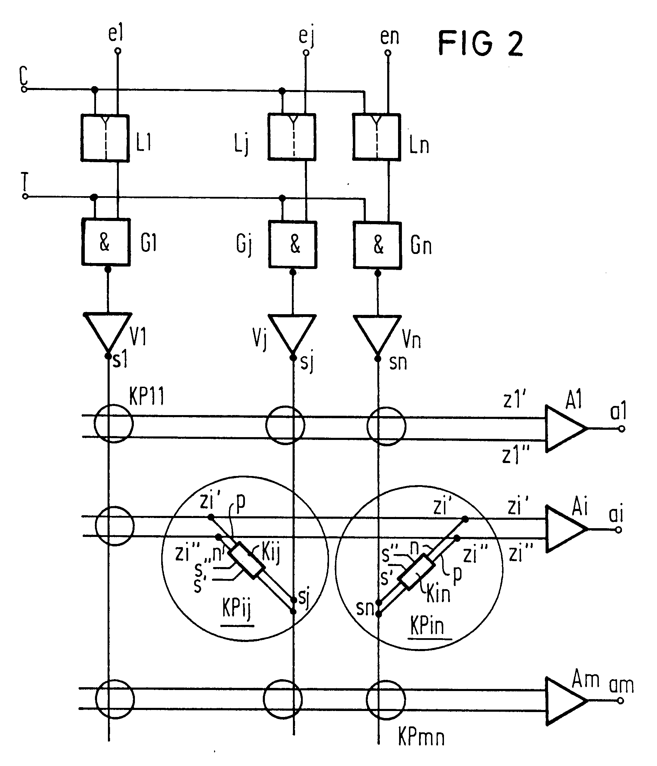

In den Zeichnungen FIG 1 und FIG 2 ist schematisch in zum Verständnis der Erfindung erforderlichem Umfange eine Breitbandsignal-Koppeleinrichtung skizziert, an deren zu Spaltenleitungen sl...sj...sn einer Koppelpunktmatrix führenden Eingängen el... ej...en im nachfolgenden näher erläuterte Eingangsdigitalsignalschaltungen vorgesehen sind und deren von Zeilenleitungen zl... zi...zm der Koppelpunktmatrix erreichte Ausgänge al...ai...am mit Ausgangsverstärkerschaltungen Al...Ai...Am versehen sind, die jeweils mit einem Differenzverstärker mit Kippverhalten gebildet sein können.

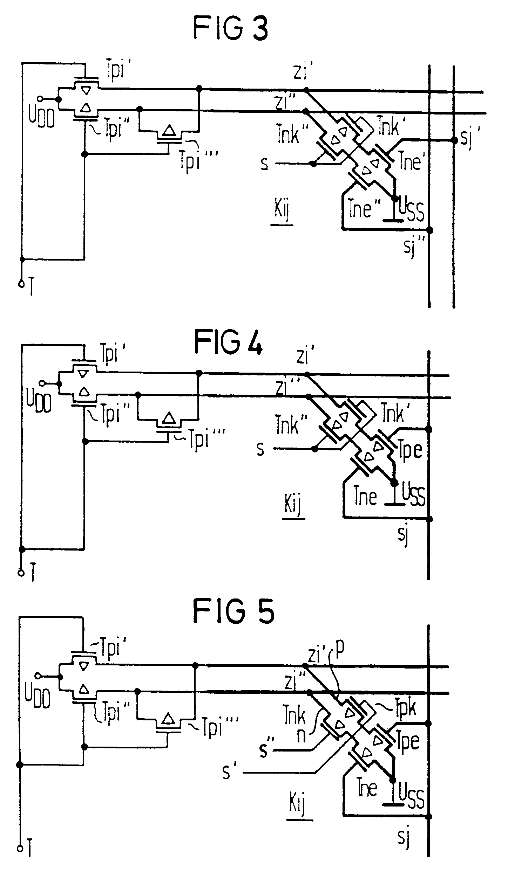

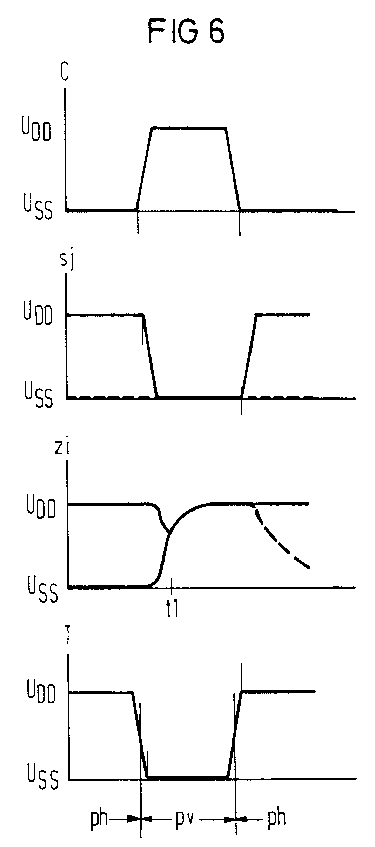

Ein solcher Differenzverstärker mit Kippverhalten kann mit einem sog. gated flip-flop realisiert werden, wie es im Prinzip (aus |a| IEEE Journal of Solid-State Circuits, Oct. 1973, 319...323, Fig.6) und auch schon in verschiedenen Modifikationen (beispielsweise aus |b| DE-OS 24 22 136, Fig.3 (16′) und aus |c| DE-OS 26 08 119, FIG.5) bekannt ist, wobei ein dort vorgesehener Symmetriertransistor (in|a|und |b|) ebenso wie dort vorgesehene Vorladetransistoren (in|b|) bzw. Lasttransistoren (in |c|) zweckmäßigerweise als p-Kanal-Transistor auszubilden ist; eine weitere Realisierungsmöglichkeit ist aus EP-A-0 264 046, FIG 5, bekannt.

Die Koppelpunktmatrix weist Koppelpunkte KPll...KPij...KPmn auf, deren Koppelelemente, wie dies beim Koppelpunkt KPij für ein Koppelelementepaar Kij weiter ins Einzelne gehend angedeutet ist, jeweils an Steuereingängen von einem (in der Zeichnung nicht mehr dargestellten) Adressendecoderelement oder Halte-Speicherelement gesteuert sein können, was hier indessen nicht weiter erläutert werden muss, da derartige Ansteuerungen von Koppelelementen allgemein bekannt sind und entsprechende Erläuterungen sich im übrigen auch schon an anderer Stelle finden (EP-A1-0 262 479).

Wie die Koppelelementpaare ...Kij... schaltungstechnisch realisiert sein können, wird in FIG 3, FIG 4 und FIG 5 verdeutlicht: Die Koppelelementpaare ... Kij... sind jeweils mit zwei jeweils an der Steuerelektrode mit einem Durchschalte- bzw. Sperrsignal beaufschlagten und mit einer Hauptelektrode an den einen bzw. den anderen Signalleiter zi′,zi˝ der zugehörigen Matrixausgangsleitung angeschlossenen Schalter-Transistoren (Tnk′, Tnk˝ in FIG 3 und FIG 4; Tpk, Tnk in FIG 5) und zwei jeweils mit einem Schalter-Transistor eine Serienschaltung bildenden Eingangs-Transistoren (Tne′, Tne˝ in FIG 3; Tpe, Tne in FIG 4 und FIG 5) gebildet, die jeweils mit der Steuerelektrode an die zugehörige Matrixeingangsleitung (Spaltenleitung) ... sj... angeschlossen sind.
Dabei können, wie dies FIG 1 und FIG 3 zeigen, die Matrixeingangsleitungen (Spaltenleitungen) jeweils zwei - Komplementärsignale führende - Signalleiter (sj′ und sj˝) aufweisen, wobei gemäß FIG 3 dann der eine Eingangs-Transistor Tne′ mit seiner Steuerelektrode an den einen Signalleiter sj′ und der andere Eingangs-Transistor Tne˝ gleichen Kanaltyps mit seiner Steuerelektrode an den anderen Signalleiter sj˝ angeschlossen ist. Wie dies FIG 4 und FIG 5 in Verbindung mit FIG 2 verdeutlichen, können auch zwei Eingangs-Transistoren Tpe, Tne unterschiedlichen Kanaltyps vorgesehen sein, die jeweils mit ihrer Steuerelektrode an den (dann einzigen) Signalleiter sj der zugehörigen Matrixeingangsleitung (Spaltenleitung) angeschlossen sind. Gemäß FIG 5 können dabei die beiden Schalter-Transistoren Tpk und Tnk ebenfalls von unterschiedlichem Kanaltyp sein, so daß dann jeweils ein Schalter-Transistor Tpk (bzw. Tnk) und ein Eingangs-Transistor Tpe (bzw. Tne) desselben Kanaltyps eine Serienschaltung bilden.
Mit ihrer der Serienschaltung abgewandten Hauptelektrode sind die Eingangs-Transistoren direkt mit dem einen Anschluß U_{SS} (Masse) der Betriebsspannungsquelle verbunden. Mit dem anderen Anschluß U_{DD} der Betriebsspannungsquelle sind die beiden Signalleiter (zi′,zi˝) der jeweiligen Matrixausgangsleitung (Zeilenleitung) ...zi... jeweils über einen Vorlade-Transistor Tpi′ bzw. Tpi˝ verbunden; an ihren der jeweiligen Matrixausgangsleitung (zi′, zi˝) zugewandten Hauptelektroden mögen die beiden Vorlade-Transistoren Tpi′, Tpi˝ miteinander über einen Quertransistor Tpi‴ verbunden sein, dessen Steuerelektrode ebenso wie die Steuerelektroden der Vorlade-Transistoren Tpi′, Tpi˝ an eine Vorlade-Umlade-Taktsignalleitung T eines Koppelfeld-Ansteuer-Taktes angeschlossen sind, der, wie dies unten noch näher erläutert wird, eine Bit-Duchschaltezeitspanne in eine Vorladephase und die eigentliche Umlade- bzw. Durchschaltephase unterteilt.

Es sei nun zunächst wieder auf FIG 1 und FIG 2 zurückgekommen: In den dort skizzierten Breitbandsignal-Koppeleinrichtungen weisen die an deren Eingängen el,..,ej,..,en vorgesehenen Eingangsdigitalsignalschaltungen zunächst jeweils ein von einer Clockleitung C her clockgesteuertes Latch Ll,...,Lj,...,Ln auf; hinter diesem Latch L ist in die Matrixeingangsleitung jeweils eine mit ihrem Steuereingang an die zuvor erwähnte Vorlade-Umlade-Taktsignalleitung T angeschlossene Verknüpfungsschaltung Gl′,Gl˝;...;Gj′,Gj˝;...;Gn′,Gn˝ (in FIG 1) bzw. Gl,...,Gj,...,Gn (in FIG 2) eingefügt, die durch das Taktsignal gegensinnig zu den Vorlade-Transistoren Tpi′, Tpi˝ (in FIG 3 bis FIG 5) gesteuert wird. Bei zwei Signalleiter aufweisenden Matrixeingangsleitungen weist, wie dies auch aus FIG 1 ersichtlich wird, jede solche Verknüpfungsschaltung zwei Verknüpfungsglieder auf, von denen das eine in den einen Signalleiter und das andere in den anderen Signalleiter eingefügt ist; bei Matrixeingangsleitungen mit nur einem (einzigen) Signalleiter genügt, wie dies aus FIG 2 ersichtlich ist, ein Verknüpfungsglied in jeder Verknüpfungsschaltung. Wie dies in FIG 1 und FIG 2 angedeutet ist, kann jedes Verknüpfungsglied beispielsweise durch ein NAND-Glied (Gl′,Gl˝,...,Gj′, Gj˝,...,Gn′,Gn˝ in FIG 1; Gl,...,Gj,...,Gn in FIG 2) gebildet sein, wobei jedem NAND-Glied eine im Beispiel ebenfalls invertierende und damit die durch das NAND-Glied bewirkte Signalinvertierung aufhebende Treiberschaltung Vl′,Vl˝,...,Vj,Vj˝,...Vn˝, Vn˝, (in FIG 1) bzw. Vl,...,Vj,...,Vn (in FIG 2) nachgeschaltet sein kann.

Wie dies auch in FIG 5 angedeutet ist, können in der in CMOS-Technik gehaltenen Koppelpunktmatrix jeweils der Schalter-Transistor Tnk und der Eingangs-Transistor Tne der einen Serienschaltung Tne-Tnk n-Kanal-Transistoren sein, während der Schalter-Transistor Tpk und der Eingangs-Transistor Tpe der anderen Serienschaltung Tpe-Tpk ebenso wie die Vorlade-Transistoren Tpi p-Kanal-Transistoren sind.
Da p-Kanal-Transistoren (bei gleicher Stromausbeute) doppelt so breit ausgelegt sein müssen wie n-Kanal-Transistoren, ist es - zur Vermeidung hieraus resultierender unsymmetrischer Belastungen der beiden Signalleiter zi′,zi˝ einer Matrixausgangsleitung - bei der aus FIG 5 ersichtlichen Realisierung der Koppelelementpaare mit jeweils zwei Transistor-Serienschaltungen unterschiedlichen Kanaltyps zweckmäßig, daß nur bei einem Teil der zu ein und derselben Matrixausgangsleitung führenden Koppelelementpaare die Transistor-Serienschaltung (Tpe, Tpk) des einen Kanaltyps mit dem einen Signalleiter (zi′) und die Transistor-Serienschaltung (Tne, Tnk) des anderen Kanaltyps mit dem anderen Signalleiter (zi˝) der Matrixausgangsleitung verbunden ist, während bei dem anderen Teil der zu der betreffenden Matrixausgangsleitung führenden Koppelelementpaare die Transistor-Serienschaltung (Tne, Tnk) des genannten anderen Kanaltyps mit dem genannten einen Signalleiter (zi′) und die Transistor-Serienschaltung (Tpe, Tpk) des genannten einen Kanaltyps mit dem genannten anderen Signalleiter (zi˝) der Matrixausgangsleitung verbunden ist; insbesondere können dabei in der einen bzw. in der anderen Weise mit den Signalleitern der zugehörigen Matrixausgangsleitung verbundene Koppelelementpaare in der betreffenden Matrixreihe abwechselnd aufeinanderfolgen.

Solche abwechselnd aufeinanderfolgende Koppelelementpaare sind in FIG 2 angedeutet: Beim Koppelpunkt KPij ist der Ausgang p der p-Kanal-Transistor-Serienschaltung (Tpe-Tpk in FIG 5) an den einen Signalleiter zi′ der zugehörigen Matrixausgangsleitung angeschlossen und der Ausgang n der n-Kanal-Transistor-Serienschaltung (Tne-Tnk in FIG 5) an den anderen Signalleiter zi˝. In FIG 2 ist dann angedeutet, daß in entsprechender Weise auch die übrigen an der Matrixeingangsleitung sj liegenden Koppelpunkte an die übrigen Matrixausgangsleitungen angeschlossen sind. Zugleich ist in FIG 2 angedeutet, daß bei den an der Matrixeingangsleitung sn liegenden Koppelpunkten die Koppelelement-Ausgänge in umgekehrtem Sinne an die beiden Signalleiter der jeweiligen Matrixausgangsleitung angeschlossen sind: Wie dies in FIG 2 für den Koppelpunkt KPin genauer dargestellt ist, ist in dieser Matrixspalte jeweils der Ausgang n (siehe auch FIG 5) der n-Kanal-Transistor-Serienschaltung des jeweiligen Koppelelementepaars (z.B. Kin) mit dem einen Signalleiter (zi′ in FIG 2) verbunden, während der Ausgang p (siehe auch FIG 5) der p-Kanal-Transistor-Serienschaltung des jeweiligen Koppelelementepaars (z.B. Kin) mit dem anderen Signalleiter (zi˝ in FIG 2) der jeweiligen Matrixausgangsleitung verbunden ist. In entsprechender Weise können die Koppelelemente aller von unterschiedlichen Matrixeingangsleitungen sl...sn (in FIG 2) zu ein und derselben Matrixausgangsleitung (z.B. zi′, zi˝) führenden Koppelpunkte mit ihrem n-Kanal-Zweig von Matrixspalte zu Matrixspalte abwechselnd an den einen Signalleiter (zi′) und den anderen Signalleiter (zi˝) der betreffenden Matrixausgangsleitung und mit ihrem p-Kanal-Zweig abwechselnd an diesen anderen Signalleiter (zi˝) und den zuvor genannten einen Signalleiter (zi′) der betreffenden Matrixausgangsleitung angeschlossen sein.

Während der Vorladephase pv (siehe FIG 6, unten) werden jeweils die beiden Signalleiter (zi′,zi˝) der Matrixausgangsleitungen (Zeilenleitungen) ...zi... über den jeweiligen Vorlade-Transistor (Tpi′ bzw. Tpi˝ in FIG 3 bis FIG 5) zumindest angenähert auf das U_{DD}-Betriebspotential geladen, wozu die im Beispiel durch p-Kanal-Transistoren gebildeten Vorlade-Transistoren Tpi′, Tpi˝ im Beispiel durch ein "Low"-Taktsignal T (siehe FIG 6, Zeile T) leitend gemacht werden.
Dabei wird mit der fallenden Flanke des Taktsignals T zugleich auch der zwischen den beiden Signalleitern zi′, zi˝ liegende Quertransistor Tpi‴ leitend mit der Folge eines Kurzschlusses der beiden Signalleiter zi′, zi˝, aufgrund dessen es zu Beginn der Vorphase sehr schnell (Zeitpunkt tl in FIG 6, Zeile zi) zunächst einmal zu einem Potentialausgleich der beiden Signalleiter zi′, zi˝ kommt; danach werden dann beide (nun potentialmäßig ausgeglichenen) Signalleiter zi′, zi˝ über die beiden Vorlade-Transistoren Tpi′, Tpi˝ auf das U_{DD}-Betriebspotential hin geladen, wobei sich die Ladedauer insgesamt dadurch verkürzt, daß nach dem durch den Quertransistor Tpi‴ herbeigeführten Potentialausgleich nun beide Vorlade-Transistoren Tpi′, Tpi˝ in den Aufladungsvorgang einbezogen sind.
Zugleich mit der Entriegelung der Vorlade-Transistoren Tpi′,Tpi˝ und des Quertransistors Tpi‴ durch das "Low"-Taktsignal T werden die in die Signalleiter sl′,sl˝,...,sj′,sj˝,...,sn′,sn˝ (in FIG 1) bzw. sl,...,sj,...,sn (in FIG 2) der Eingangsleitungen gemäß FIG 1 und FIG 2 eingefügten Verknüpfungsglieder Gl′,Gl˝,... ..,Gj′,Gj˝,...,Gn′,Gn˝ (in FIG 1) bzw. Gl,...Gj,...,Gn (in FIG 2) im Beispiel durch das gleiche "Low"-Taktsignal T in entgegengesetztem Sinne gesteuert, so daß an ihrem Ausgang (bzw. am Ausgang einer nachfolgenden, eine vom Verknüpfungsglied ..Gj.. bewirkte Invertierung rückgängig machenden Treiberschaltung ..Vj..) und damit auf dem zugehörigen Signalleiter ..sj.. der betreffenden Matrixeingangsleitung das U_{SS}-Betriebspotential (Masse) herrscht. Dies hat zur Folge, daß die Eingangs-Transistoren Tne′,Tne˝ (in FiG 3) bzw. Tne, Tpe (in FIG 4 und FIG 5) sämtlicher Koppelelementpaare ...Kij... gesperrt werden, so daß die Aufladung der jeweils beiden Signalleiter (zi′, zi˝) der Matrixausgangsleitungen (Zeilenleitungen) ...zi... unabhängig von der Ansteuerung der jeweiligen Schalter-Transistoren Tnk′,Tnk˝ (in FIG 3 und FIG 4) bzw. Tpk,Tnk (in FIG 5) der einzelnen Koppelelementpaare ..Kij.. vor sich gehen kann. Auf der jeweiligen Matrixeingangsleitung (Spaltenleitung) ..sj.. kann sich dabei ggf. schon das dem jeweils durchzuschaltenden Bit entsprechende Potential aufbauen (bzw. beibehalten werden), wie dies Zeile sj in FIG 6 verdeutlicht.

Bei durch den Quertransistor Tpi‴ herbeigeführter Potentialgleichheit der beiden Signalleiter zi′, zi˝ sind die Anfangsbedingungen für eine sichere Verstärkung durch den Differenzverstärker Ai (in FIG 1 und FIG 2) entsprechend früh gegeben, so daß bereits zu einem entsprechend frühen Zeitpunkt die darauffolgende Umlade- bzw. Durchschaltephase ph (siehe FIG 6, unten) einsetzen kann. In dieser Umladephase ph (siehe FIG 6, unten), werden im Beispiel durch ein "High"-Taktsignal T (siehe FIG 6 in Zeile T) Vorlade-Transistoren Tpi′,Tpi˝ und Quertransistor Tpi‴ (in FIG 3 bis FIG 5) gesperrt und zugleich die in die Signalleiter der Matrixeingangsleitungen eingefügten Verknüpfungsglieder gewissermaßen wieder entriegelt, so daß auf dem zugehörigen Signalleiter sl′,sl˝,...,sj′,sj˝,...,sn′,sn˝ (in FIG 1 und FIG 3) bzw. sl,...,sj,...,sn (in FIG 2 und FIG 4 und FIG 5) jeweils das Ausgangssignal des jeweiligen eingangsseitigen Latchs Ll,...,Lj, ...,Ln (in FIG 1 und FIG 2) erscheint. Das jeweilige Latch ..Lj.. möge dabei von der Clockleitung C (in FIG 1) her mit einem Clocksignal gesteuert sein, wie es in FiG 6 in Zeile C angedeutet ist. Sind nun in einem Koppelelementepaar ...Kij... dessen Schalt-Transistoren Tnk′,Tnk˝ (in FIG 3 und FIG 4) bzw. Tpk, Tnk (in FIG 5) aufgrund eines am Steuereingang s (in FIG 3 und FIG 4) anliegenden (im Beispiel "High"-)Durchschaltesignals (siehe FIG 6, Zeile s) bzw. aufgrund eines am Steuereingang s′ (in FIG 5) anliegenden (im Beispiel "Low"-)Durchschaltesignals und eines am Steuereingang s˝ (in FIG 5) anliegenden (im Beispiel "High"-) Durchschaltesignals (siehe FIG 6, Zeile s) leitend und befindet sich damit der Koppelpunkt im Durchschaltezustand, so werden jetzt je nach dem dem durchzuschaltenden Bit entsprechenden, auf der betreffenden Matrixeingangsleitung (Spaltenleitung) ..sj.. herrschenden Signalzustand die Signalleiter zi′,zi˝ der mit dieser Matrixeingangsleitung (Spaltenleitung) ... sj... uber das betreffende Koppelelement ..Kij.. verbundene Matrixausgangsleitung (Zeilenleitung) ...zi... entladen werden bzw. auf dem in der Vorphase pv angenommenen U_{DD}-Potential verbleiben:

Herrscht auf dem (einzigen) Signalleiter der betreffenden Matrixeingangsleitung (Spaltenleitung) sj (in FIG 2 und FIG 4 und FIG 5) der "Low"-Signalzustand und ist dementsprechend der n-Kanal-Eingangs-Transistor Tne (in FIG 4 und FIG 5) des betreffenden Koppelelementpaares Kij gesperrt, so wird der betreffende Signalleiter zi˝ der Matrixausgangsleitung (Zeilenleitung) zi über das betreffende Koppelelement dieses Koppelelementpaares Kij nicht entladen, sondern behält, sofern kein anderer zu dieser Matrixausgangsleitung (Zeilenleitung) zi führender Koppelpunkt sich im Durchschaltezustand befindet, den U_{DD}-Potentialzustand bei. Gleichzeitig ist der Eingangs-Transistor Tpe (in FIG 4 und FIG 5) des betrachteten Koppelelementpaares Kij ebenso wie der Schalter-Transistor Tpk leitend, so daß der zugeordnete Signalleiter zi′ der Matrixausgangsleitung (Zeilenleitung) zi über dieses Koppelelement des Koppelelementpaares Kij entladen und auf das U_{SS}-Potential gezogen wird.

Herrscht dagegen auf dem Signalleiter der gerade betrachteten Matrixeingangsleitung sj (in FIG 2 und FIG 4 und FIG 5) der "High"-Signalzustand und ist dementsprechend der n-Kanal-Vorschalt-Transistor Tne (in FIG 4 und FIG 5) des betreffenden Koppelelementpaares Kij leitend, so wird der betreffende Signalleiter zi˝ der Matrixausgangsleitung (Zeilenleitung) zi über das betreffende Koppelelement dieses Koppelelementpaares Kij entladen und auf das U_{SS}-Potential gezogen.
Gleichzeitig ist dann der Vorschalt-Transistor Tpe (in FIG 4 und FIG 5) des betrachteten Koppelelementpaares Kij nichtleitend, so daß der zugeordnete Signalleiter zi′ der Matrixausgangsleitung (Zeilenleitung) über dieses Koppelelement des Koppelelementpaares Kij nicht entladen wird, sondern, sofern kein anderer zu dieser Matrixausgangsleitung (Zeilenleitung) zi führender Koppelpunkt sich im Durchschaltezustand befindet, den U_{DD}-Potentialzustand beibehält.

Herrscht auf dem einen Signalleiter sj′ (in FIG 1 und FIG 3) einer zwei Signalleiter sj′,sj˝ (in FIG 1 und FIG 3) aufweisenden Matrixeingangsleitung (Spaltenleitung) der "Low"-Signalzustand und ist dementsprechend der n-Kanal-Eingangs-Transistor Tne′ (in FIG 3) des betreffenden Koppelelementpaares Kij gesperrt, so wird der betreffende Signalleiter zi′ der Matrixausgangsleitung (Zeilenleitung) zi über das betreffende Koppelelement dieses Koppelelementpaares Kij nicht entladen, sondern behält, sofern kein anderer zu dieser Matrixausgangsleitung (Zeilenleitung) zi führender Koppelpunkt sich im Durchschaltezustand befindet, den U_{DD}-Potentialzustand bei.
Gleichzeitig herrscht auf dem anderen Signalleiter sj˝ (in FIG 1 und FIG 3) der "High"-Signalzustand, so daß der Eingangs-Transistor Tne" (in FIG 3) des betrachteten Koppelelementpaares Kij zugleich mit dem Schalter-Transistor Tnk˝ leitend ist - mit der Folge, daß der zugeordnete Signalleiter zi˝ der Matrixausgangsleitung (Zeilenleitung) zi über dieses Koppelelement des Koppelelementpaares Kij entladen und auf das U_{SS}-Potential gezogen wird.

Herrscht umgekehrt auf dem Signalleiter sj′ (in FIG 1 und FIG 3) der gerade betrachteten Matrixeingangsleitung der "High"-Signalzustand und ist dementsprechend der n-Kanal-Eingangs-Transistor Tne′ (in FIG 3) des betreffenden Koppelelementpaares Kij zugleich mit dem Schalter-Transistor Tnk′ leitend, so wird der betreffende Signalleiter zi′ der Matrixausgangsleitung (Zeilenleitung) zi über das betreffende Koppelelement dieses Koppelelementpaares Kij entladen und auf das U_{SS}-Potential gezogen.
Gleichzeitig herrscht dann auf dem anderen Signalleiter sj˝ (in FIG 1 und FIG 3) der "Low"-Signalzustand, so daß der Eingangs-Transistor Tne˝ (in FIG 3) des betrachteten Koppelelementpaares Kij nichtleitend ist - mit der Folge, daß der zugeordnete Signalleiter zi˝ der Matrixausgangsleitung (Zeilenleitung) über dieses Koppelelement des Koppelelementpaares Kij nicht entladen wird, sondern, sofern kein anderer zu dieser Matrixausgangsleitung (Zeilenleitung) zi führender Koppelpunkt sich im Durchschaltezustand befindet, den U_{DD}-Potentialzustand beibehält.

## Patentansprüche

1. Breitbandsignal-Koppeleinrichtung mit einer Koppelpunktmatrix in FET-Technik, deren Matrixeingangsleitungen (sj) über jeweils mit Koppelelementpaaren (Kij) gebildete Koppelpunkte (KPij) mit jeweils mit zwei Signalleitern (zi′, zi˝) gebildeten Matrixausgangsleitungen (zi) verbindbar sind, an deren beiden Signalleiter (zi′, zi˝) jeweils die beiden Signaleingänge einer mit einem Differenzverstärker mit Kippverhalten gebildeten Ausgangsverstärkerschaltung (Ai) anschließbar sind,
wobei die Koppelelementpaare (Kij) jeweils mit zwei jeweils an der Steuerelektrode mit einem Durchschalte- bzw. Sperrsignal beaufschlagten und mit einer Hauptelektrode an den einen bzw. anderen Signalleiter (zi′, zi˝) der zugehörigen Matrixausgangsleitung (zi) angeschlossenen Schalter-Transistoren (Tpk, Tnk) und zwei jeweils mit einem Schalter-Transistor (Tpk, Tnk) eine Serienschaltung bildenden Eingangs-Transistoren (Tpe, Tne) gebildet sind, die jeweils mit der Steuerelektrode an einen Signalleiter (sj) der zugehörigen Matrixeingangsleitung (sj) angeschlossen sind,
wobei die beiden Signalleiter (zi′, zi˝) der jeweiligen Matrixausgangsleitung (zi) mit dem einen Anschluß (U_{DD}) der Betriebsspannungsquelle über Vorlade-Transistoren (Tpi′, Tpi˝) verbunden sind, die jeweils mit ihrer Steuerelektrode an die Taktsignalleitung (T) eines eine Bit-Durchschaltezeitspanne in eine Vorladephase (pv) und die eigentliche Durchschaltephase (ph) unterteilenden Koppelfeld-Ansteuer-Taktes (T) angeschlossen sind, so daß in jeder Vorladephase (pv) beide Signalleiter der Matrixausgangsleitung (zi) über den jeweiligen Vorlade-Transistor (Tpi′, Tpi˝) zumindest angenähert auf das an dem genannten einen Anschluß (U_{DD}) der Betriebsspannungsquelle herrschende Potential geladen werden,
und wobei die beiden Vorlade-Transistoren (Tpi′, Tpi˝) an ihren der jeweiligen Matrixausgangsleitung (zi) zugewandten Hauptelektroden miteinander über einen Quertransistor (Tpi‴) verbunden sein können, dessen Steuerelektrode mit den Steuerelektroden der Vorlade-Transistoren (Tpi′, Tpi˝) verbunden ist,
**dadurch gekennzeichnet**,
daß in die Eingangsleitungen (...sj...) jeweils eine mit ihrem Steuereingang an die Taktsignalleitung (T) angeschlossene, gegensinnig zu den Vorlade-Transistoren (Tpi′, Tpi˝) gesteuerte Verknüpfungsschaltung (G) eingefügt ist
und daß in den Koppelelementpaaren (...Kij...) die der jeweiligen Serienschaltung abgewandten Hauptelektroden der beiden Eingangs-Transistoren (Tpe, Tne) direkt mit dem anderen Anschluß (U_{SS}, Masse) der Betriebsspannungsquelle verbunden sind.

2. Breitbandsignal-Koppeleinrichtung nach Anspruch 1,
**dadurch gekennzeichnet**,
daß jedem Verknüpfungsglied (G) eine Treiberschaltung (V) nachgeschaltet ist.

3. Breitbandsignal-Koppeleinrichtung nach Anspruch 1 oder 2,
**dadurch gekennzeichnet**,
daß die Koppelelementpaare (...Kij...) jeweils zwei Eingangs-Transistoren (Tne′, Tne˝) gleichen Kanaltyps aufweisen, die mit ihren Steuerelektroden an zwei - Komplementärsignale führende - Signalleiter (sj′, sj˝) der zugehörigen Matrixeingangsleitung (sj) angeschlossen sind.

4. Breitbandsignal-Koppeleinrichtung nach Anspruch 1 oder 2,
**dadurch gekennzeichnet**,
daß die Koppelelementpaare (...Kij...) jeweils zwei Eingangs-Transistoren (Tpe, Tne) unterschiedlichen Kanaltyps aufweisen, die mit ihrer Steuerelektrode an ein und denselben Signalleiter (sj) der zugehörigen Matrixeingangsleitung (sj) angeschlossen sind.

5. Breitbandsignal-Koppeleinrichtung nach Anspruch 4,
**dadurch gekennzeichnet**,
daß die Koppelelementpaare (...Kij...) jeweils zwei Schalter-Transistoren (Tpk, Tnk) unterschiedlichen Kanaltyps aufweisen, die jeweils mit einem Eingangs-Transistor (Tpe, Tne) desselben Kanaltyps eine Serienschaltung bilden.

6. Breitbandsignal-Koppeleinrichtung nach Anspruch 5,
**dadurch gekennzeichnet**,
daß nur bei einem Teil der zu ein und derselben Matrixausgangsleitung (zi) führenden Koppelelementpaare (Kij) die Transistor-Serienschaltung (Tpe, Tpk) des einen Kanaltyps mit dem einen Signalleiter (zi′) und die Transistor-Serienschaltung (Tne, Tnk) des anderen Kanaltyps mit dem anderen Signalleiter (zi˝) der Matrixausgangsleitung (zi) verbunden ist und bei dem anderen Teil der zu der betreffenden Matrixausgangsleitung (zi) führenden Koppelelementpaare die Transistor-Serienschaltung des genannten anderen Kanaltyps mit dem genannten einen Signalleiter (zi′) und die Transistor-Serienschaltung des genannten einen Kanaltyps mit dem genannten anderen Signalleiter (zi˝) der Matrixausgangsleitung (zi) verbunden ist.

7. Breitbandsignal-Koppeleinrichtung nach Anspruch 6,
**dadurch gekennzeichnet**,
daß in der einen bzw. in der anderen Weise mit den Signalleitern (zi′, zi˝) der zugehörigen Matrixausgangsleitung verbundene Koppelelementpaare in der betreffenden Matrixreihe abwechselnd aufeinanderfolgen.

## Claims

1. Broadband signal coupling device having a cross-point matrix using FET technology, whose matrix input lines (sj) can be connected via crosspoints (KPij) which are in each case formed by coupling element pairs (Kij), to matrix output lines (zi), which are in each case formed by two signal conductors (zi′, zi˝), to whose two signal conductors (zi′, zi˝) the two signal inputs of an output amplifier circuit (Ai), which is formed by a differential amplifier having a monostable behaviour, can in each case be connected, the coupling element pairs (Kij) in each case being formed by two switch transistors (Tpk, Tnk), which are connected by means of a main electrode to one or the other signal conductor (zi′ , zi˝) of the associated matrix output line (zi) and to each of whose control electrodes a switch-on or switch-off signal is respectively applied, and two input transistors (Tpe, Tne) which in each case form a series circuit with one switch transistor (Tpk, Tnk) and each of whose control electrodes is connected to a signal conductor (sj) of the associated matrix input line (sj), the two signal conductors (zi′ , zi˝) of the respective matrix output line (zi) being connected to one connection (U_{DD}) of the operating voltage source via precharging transistors (Tpi′ , Tpi˝) , each of whose control electrodes are connected to the clock signal line (T) of a switching matrix drive clock (T) which divides a bit switch-on time interval into a precharging phase (pv) and the actual switch-on phase (ph), so that, in each precharging phase (pv), both signal conductors of the matrix output line (zi) are charged via the respective precharging transistor (Tpi′, Tpi˝) at least approximately to a potential which exists on the said one connection (U_{DD}) of the operating voltage source, and it being possible to connect the two precharging transistors (Tpi′, Tpi˝) to one another, via a transverse transistor (Tₚᵢ‴) on their main electrodes which face the respective matrix output line (zi), the control electrode of which transverse transistor (Tpi‴) is connected to the control electrodes of the precharging transistors (Tpi′, Tpi˝), characterized in that in each case one logic circuit (G), whose control input is connected to the clock signal line (T) and which is controlled in the opposite sense to the precharging transistors (Tpi′, Tpi˝), is inserted into the input lines (...sj...), and in that, in the coupling element pairs (...Kij...), those main electrodes of the two input transistors (Tpe, Tne) which face away from the respective series circuit are directly connected to the other connection (Uₛₛ, earth) of the operating voltage source.

2. Broadband signal coupling device according to Claim 1, characterized in that a driver circuit (V) is connected downstream of each logic element (G).

3. Broadband signal coupling device according to Claim 1 or 2, characterized in that the coupling element pairs (...Kij...) each have two input transistors (Tne′, Tne") of the same conductance type, whose control electrodes are connected to two signal conductors (sj′ sj˝) - which carry complementary signals - of the associated matrix input line (sj).

4. Broadband signal coupling device according to Claim 1 or 2, characterized in that the coupling element pairs (...Kij...) in each case have two input transistors (Tpe, Tne) of different conductance type, whose control electrodes are connected to one and the same signal conductor (sj) of the associated matrix input line (sj).

5. Broadband signal coupling device according to Claim 4, characterized in that the coupling element pairs (...Kij...) in each case have two switch transistors (Tpk, Tnk) of different conductance type, which in each case form a series circuit with an input transistor (Tpe, Tne) of the same conductance type.

6. Broadband signal coupling device according to Claim 5, characterized in that only in the case of some of the coupling element pairs (Kij) which lead to one and the same matrix output line (zi) is the transistor series circuit (Tpe, Tpk) of one conductance type connected to one signal conductor (zi′) and the transistor series circuit (Tne, Tnk) of the other conductance type connected to the other signal conductor (zi˝) of the matrix output line (zi) and, in the case of the other coupling element pairs which lead to the relevant matrix output line (zi), the transistor series circuit of the said other conductance type is connected to the said one signal conductor (zi′) and the transistor series circuit of the said one conductance type is connected to the said other signal conductor (zi˝) of the matrix output line (zi).

7. Broadband signal coupling device according to Claim 6, characterized in that coupling element pairs which are connected in the one manner or the other to the signal conductors (zi′, zi˝) of the associated matrix output line follow one another alternately in the relevant matrix row.

## Revendications

1. Dispositif de couplage de signaux à large bande comportant une matrice de points de couplage réalisée selon la technique FET et dont les lignes d'entrée (sj) peuvent être reliées, par l'intermédiaire de points de couplage (KPij), formés respectivement par des couples d'éléments de couplage (Kij), à des lignes de sortie (zi) de la matrice, formés respectivement par deux conducteurs de transmission de signaux (zi′,zi˝), auxquels peuvent être raccordées respectivement les deux entrées de signaux d'un circuit amplificateur de sortie (Ai) formé par un amplificateur différentiel ayant un comportement de basculement,
et dans lequel les couples (Kij) d'éléments de couplage sont formés chacun par deux transistors de commutation (Tpk, Tnk), qui sont chargés chacun, au niveau de l'électrode de commande, par un signal d'interconnexion ou de blocage et sont raccordés, par une électrode principale, à l'un ou à l'autre des conducteurs de transmission de signaux (zi′, zi˝) de la ligne associée de sortie (zi) de la matrice, et par deux transistors d'entrée (Tpe, Tne), qui forment chacun un circuit série avec un transistor de commutation (Tpk, Tnk), et qui sont reliés respectivement, par l'électrode de commande, à un conducteur de signaux (sj) du conducteur d'entrée (sj)
les deux conducteurs de transmission de signaux (zi′, zi˝) de la ligne respective de sortie (zi) de la matrice sont reliés à une borne (U_{DD}) de la source de tension de service par l'intermédiaire de transistors de précharge (Tpi′, Tpi˝), qui sont raccordés chacun, par leur électrode de commande, à la ligne (T) de transmission du signal d'une cadence (T) de commande du champ de couplage, qui subdivise un intervalle de temps d'interconnexion de transmission de bits en une phase de précharge (pv) et en la phase proprement dite d'interconnexion (ph), de sorte que, pendant chaque phase de précharge (pv), les deux conducteurs de transmission de signaux de la ligne de sortie (zi) de la matrice sont chargés au moins approximativement au potentiel qui est présent sur ladite première borne (U_{DD}) de la source de tension de service, et dans lequel
les deux transistors de précharge (Tpi′, Tpi˝) peuvent être reliés entre eux, au niveau de leurs électrodes principales tournées vers la ligne de sortie respective (zi) de la matrice, par l'intermédiaire d'un transistor transversal (Tpi‴), dont l'électrode de commande est reliée aux électrodes de commande des transistors de précharge (Tpi′, Tpi˝),
caractérisé par le fait
que dans chacune des lignes d'entrée (...sj...) est inséré un circuit combinatoire (G), qui est raccordé par son entrée de commande à la ligne (T) de transmission du signal de cadence et est commandé en sens opposé par rapport aux transistors de précharge (Tpi′, Tpi˝), et
que dans les couples (...Kij...) d'éléments de couplage, les électrodes principales, tournées à l'opposé du circuit série respectif, des deux transistors d'entrée (Tpe, Tne) sont reliés directement à l'autre borne (U_{SS}, Masse) de la source de tension de service.

2. Dispositif de couplage pour signaux à large bande suivant la revendication 1, caractérisé par le fait qu'un circuit d'attaque (V) est branché en aval de chaque circuit combinatoire (G).

3. Dispositif de couplage pour signaux à large bande suivant la revendication 1 ou 2, caractérisé par le fait que les couples (...Kij...) d'éléments de couplage comportent respectivement deux transistors d'entrée (Tne′, Tne˝) possédant le même type de canal, qui sont raccordés, par leurs électrodes de commande, à deux conducteurs (sj′, sj˝) de transmission de signaux - qui véhiculent des signaux complémentaires - de la ligne d'entrée associée (sj) de la matrice.

4. Dispositif de couplage pour signaux à large bande suivant la revendication 1 ou 2, caractérisé par le fait que les couples (...Kij...) d'éléments de couplage possèdent respectivement deux transistors d'entrée (Tpe, Tne) possédant des types de canaux différents et qui sont raccordés, par leur électrode de commande, à un même conducteur de transmission de signaux (sj) de la ligne d'entrée associée (sj) de la matrice.

5. Dispositif de couplage pour signaux à large bande suivant la revendication 4, caractérisé par le fait que les couples (...Kij...) d'éléments de couplage possèdent chacun deux transistors de commutation (Tpk, Tnk) possédant des types de canaux différents et qui forment chacun un circuit série avec un transistor d'entrée (Tpe, Tne) possédant le même type de canal.

6. Dispositif de couplage pour signaux à large bande suivant la revendication 5, caractérisé par le fait que seulement pour une partie des couples (Kij) d'éléments de couplage, qui aboutissent à une seule et même ligne de sortie (zi) de la matrice, le circuit série (Tpe, Tpk) formé de transistors possédant un premier type de canal est relié à l'un des conducteurs de signaux (zi′) et le circuit série (Tne, Tnk) formé de transistors possédant le second type de canal est relié à l'autre conducteur de transmission de signaux (zi˝) de la ligne de sortie (zi) de la matrice, alors que pour l'autre partie des couples d'éléments de couplage, qui aboutissent à la ligne de sortie considérée (zi) de la matrice, le circuit série des transistors possédant le second type de canal indiqué est relié audit premier conducteur de transmission de signaux (zi′), le circuit série formé de transistors possédant ledit premier type de canal étant relié audit autre conducteur de transmission de signaux (zi˝) de la ligne de sortie (zi) de la matrice.

7. Dispositif de couplage pour signaux à large bande suivant la revendication 6, caractérisé par le fait que des couples d'éléments de couplage, reliés d'une manière ou d'une autre aux conducteurs de transmission de signaux (zi′, zi˝) de la ligne de sortie associée de la matrice, se succèdent alternativement dans la rangée considérée de la matrice.
